# EUROPÄISCHE PATENTSCHRIFT

(11) **EP 1 799 396 B1**
(45) Veröffentlichungstag und Bekanntmachung des Hinweises auf die Patenterteilung: **06.03.2013**
(21) Anmeldenummer: 05782758.6
(22) Anmeldetag: 10.09.2005
(51) Int. Cl.: B23Q 7/04, B25J 15/10

(54) **WECHSELVORRICHTUNG FÜR SPANNKÖPFE MIT MEHREREN SPANNBACKEN**
REPLACEMENT DEVICE FOR CLAMPING HEADS COMPRISING A PLURALITY OF CLAMPING JAWS
DISPOSITIF DE REMPLACEMENT POUR TETES DE SERRAGE COMPORTANT PLUSIEURS MACHOIRES DE SERRAGE

(30) Priorität: 10.09.2004 DE 102004044848
(43) Veröffentlichungstag der Anmeldung: 27.06.2007
(73) Patentinhaber: HAINBUCH GMBH SPANNENDE TECHNIK, D-71672 Marbach (DE)
(72) Erfinder: HETSCHEL, Wilhelm, 74336 Brackenheim (DE)
(74) Vertreter: Patentanwälte Ruff, Wilhelm, Beier, Dauster & Partner
(86) Internationale Anmeldenummer: PCT/EP2005/009744
(87) Internationale Veröffentlichungsnummer: WO 2006/027269

(56) Entgegenhaltungen:
- WO-A-96/12582
- DE-A1- 2 831 140
- DE-A1- 4 400 354
- US-A- 4 768 269

## Beschreibung

### Anwendungsgebiet und Stand der Technik

Die Erfindung betrifft eine Wechselvorrichtung für Spannköpfe mit mehreren Spannbacken gemäß dem Oberbegriff des Anspruchs 1.

Aus der DE 2831140 A ist eine Spannzange bekannt, welche aus einem Spannkopf und einem Grundkörper besteht. Diese Spannzangen zeichnen sich dadurch aus, dass sie sehr schnell umrüstbar sind. Grundkörper und Spannkopf sind hierbei durch eine Kupplung verbunden. Der Spannkopf besteht aus mehreren Spannbacken die durch ein Elastomer verbunden sind. Das Elastomer gestattet, dass der Spannkopf zumindest im Bereich der Kupplung zum Verbinden und Lösen der Kupplung zusammengedrückt werden kann.

Die Kupplung zwischen Grundkörper und Spannkopf wird zumeist durch einen radialen Vorsprung gebildet. Das Lösen und Fügen der Verbindungskupplung erfolgt durch radiales Zusammendrücken der einzelnen Spannbacken des Spannkopfes bzw. durch eine Kippbewegung der einzelnen Spannbacken die dazu führt, dass die radiale Kupplung ausrastet. Zum Lösen der Kupplung wird ein Werkzeug verwendet, welches in axiale Aussparungen an der Stirnseite der Segmente des Spannkopfes eingreift, wie es beispielsweise ebenfalls in der DE 2831140 A beschrieben ist. Diese Art der Betätigung hat den Nachteil, dass sie dem Kraftverlauf nicht gerecht wird. Wird das Elastomer zwischen den Spannbacken des Spannkopfes zusammengedrückt, so steigt die dazu benötigte Kraft überproportional an. Dies hat zur Folge, dass am Ende des Vorgangs sehr viel Kraft von einer Bedienperson aufzuwenden ist.

Dies kann dadurch gelöst werden, indem ein Getriebesystem eingesetzt wird, welches diesem Kraftverlauf gerecht wird. In der DE 10138343 A1 ist eine solche Vorrichtung beschrieben, welche durch einen Hebelmechanismus betätigt wird. Auch sind Vorrichtungen bekannt, die hydraulisch bzw. pneumatisch betätigt werden. Allen bekannten Vorrichtungen ist gemeinsam, dass sie über Schwenkteile verfügen, deren Anzahl auf die Anzahl der Spannbacken des Spannkopfes abgestimmt ist. Diese Schwenkteile sind radial verlaufend ausgebildet und in tangential verlaufenden Achsen gelagert. Die zum Schwenken notwendige Betätigungskraft wird hierbei durch einen zentralen Zugbolzen eingeleitet.

Bedingt durch die Anordnung der Schwenkteile, bauen die bekannten Wechselwerkzeuge radial sehr groß und sind zumeist wesentlich größer als der zu wechselnde Spannkopf. Dies erschwert den Einsatz bei Maschinen, die um die Bearbeitungsspindel Werkzeuge angeordnet haben, bzw. die Spindeln eng zusammenstehen. In manchen Anwendungsfällen ist es auch erforderlich, das zu bearbeitende Werkstück so weit wie möglich zu stützen, bzw. dessen Ausspannlänge so gering wie möglich zu halten. Zu diesem Zweck wird der Spannkopf mit einem verlängerten Vorbau ausgebildet. Dieser für die Abstützung erforderliche Vorbau erstreckt sich von der Stirnseite des Spannkopfes aus. Der Vorbau hat zumeist einen kleinen Durchmesser, damit genügend Kollisionsfreiraum für die zur Bearbeitung notwendigen Werkzeuge vorhanden ist. In diesen Fällen kann der Spannkopf mit den bekannten Wechselvorrichtungen nicht mehr gewechselt werden, da die zentrale Anordnung des Zugbolzens sowie die radiale Erstreckung der Schwenkteile ein Fügen des Spannkopfes verhindern. Um dennoch ein Wechseln zu ermöglichen, werden die für die zur Betätigung notwendigen Stifte extrem überlang ausgeführt. Damit wird jedoch das Hebelverhältnis derart ungünstig verändert, so dass die Betätigungskraft enorm ansteigt und kaum mehr von Hand erzeugt werden kann.

Die WO 96/12582, die den Obergegriff von Anspruch 1 bildet, reight eine Wechsel vorrichtung mit Schwenkteilen auf die ein Kolben über ein Hebelsystem einwirkt.

### Aufgabe und Lösung

Der Erfindung liegt die Aufgabe zugrunde, eine eingangs genannte Wechselvorrichtung zu schaffen, mit der die Probleme des Standes der Technik vermieden werden können und insbesondere auch Spannköpfe mit einem abstehenden Vorbau bei gleichzeitig geringem Kraftaufwand gewechselt werden können, sowie der radiale Bauraum erheblich reduziert ist.

Gelöst wird diese Aufgabe durch eine Wechselvorrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Die Wechselvorrichtung weist einen Träger auf, der sich von einer Mittelachse, insbesondere einer Mittellängsachse, der Wechselvorrichtung mit Außenbereichen in radialer Richtung von der Mittelachse abstehend erstreckt. An den Außenbereichen bzw. den Enden oder daran befestigten Trägerplatten odgl. ist jeweils eine Lagerung für ein Schwenkteil pro Spannbacke vorgesehen. Das Schwenkteil weist mindestens einen, unter Umständen auch zwei, verlängernden Abschnitt auf, der mit einer Spannbacke- zusammenwirkt. Bei diesem Zusammenwirken, welches beispielsweise durch ein Einstecken in die Spannbacke erreicht werden kann, können eine Radialkraft sowie ein Drehmoment übertragen werden. Wird der Schwenkteil um die Lagerung geschwenkt, so schwenken die verlängernden Abschnitte mit und rücken in radialer Richtung weiter zusammen, insbesondere an ihren Enden. Dadurch drückern sie auch auf an sich bekannte Art und Weise die Spannbacken zusammen, insbesondere an dem entfernten Ende, um eine vorgenannte Kupplung herzustellen oder zu lösen. Erfindungsgemäß ist für das Schwenken der Schwenkteile eine Krafteinrichtung vorgesehen, deren Wirkrichtung im wesentlichen radial verläuft, wobei sie an einem Punkt an den Schwenkteilen zum Verschwenken angreift, der einen axialen Abstand zu der Lagerung sowie zu den verlängernden Abschnitten aufweist. Insbesondere kann die Krafteinrichtung im wesentlichen radial nach außen wirken.

Dadurch ist es möglich, dass, anders als im Stand der Technik, die Schwenkteile zumindest teilweise, vorteilhaft großteils, in axialer Richtung verlaufen. Radial innerhalb der Lagerung für die Schwenkteile kann ein Freiraum vorgesehen sein, in den beispielsweise ein Vorbau eines Spannkopfes hineinragen kann. Des weiteren kann dadurch die Hebellänge bzw. die Hebelwirkung, über welche die Krafteinrichtung an den Schwenkteilen angreift, unabhängig von der radialen Erstreckung gewählt werden.

Die Krafteinrichtung, welche an den Schwenkteilen angreift weist gemäß der Erfindung ein Kniehebelsystem auf für einen vorteilhaften Kraftverlauf sowie ein selbsttätige Arretierung. Damit kann eine im wesentlichen axial wirkende Betätigungskraft umgewandelt werden in die Kraft, welche in radialer Richtung auf die Schwenkteile wirkt. Dabei kann die Wechselvorrichtung einen Hebel-Träger aufweisen, der gegenüber dem Träger axial bewegbar ist bzw. die beiden Teile sind relativ zueinander bewegbar. Pro Schwenkteil ist an dem Hebel-Träger mindestens ein Hebel angeordnet und mit dem Schwenkteil wirkverbunden, beispielsweise drehbar gelagert durch Verschraubung oder dergleichen. Der Hebel steht dabei in einem schrägen Winkel zur radialen Richtung bzw. zur Mittelachse. Vorteilhaft kann er dabei in etwa in derjenigen Richtung schräg auf das Schwenkteil zu weisen, in welcher der Hebel-Träger sich auf den Träger zu bewegt bei der Relativbewegung der beiden Teile. Beispielsweise kann dieser Winkel etwa 30° bis 60° betragen, bevorzugt etwa 45°. Besonders vorteilhaft ist es, wenn das Verhältnis zwischen axialem Betätigungsweg und radialem Betätigungsweg für den Hebel am Ende des Schwenkens möglichst groß ist, da dann die Kraftübersetzung ebenso sehr groß ist. Der Endwinkel des Hebels ist vorteilhaft nahezu 90°.

Werden Hebel-Träger und Träger relativ zueinander bewegt, insbesondere aufeinander zu bewegt, so wird der Hebel durch seine Lagerung sowohl an dem Hebel-Träger als auch an dem Schwenkteil in einen immer flacher werden Winkel zur radialen Richtung gedreht, wodurch er die Schwenkteile nach außen drückt. Dabei ist es möglich, für eine Art Selbstarretierung den Hebel über die radiale Richtung hinaus sozusagen zu überdrücken, wobei er durch die Gegenkraft in dieser Stellung verrastet. Dies ist dann ein typisches Kniehebelsystem.

Vorteilhaft verlaufen die Schwenkteile in etwa im wesentlichen in axialer Richtung, also parallel zur Mittelachse. Dadurch kann eine radial relativ eng bauende Anordnung bereitgestellt werden. Sie ermöglicht es, die Wechselvorrichtung in axialer Richtung etwas länger zu bauen um so bei geringer radialer Erstreckung eine ausreichende Hebelwirkung auf die verlängernden Abschnitte und somit die Spannbacken auszuüben.

Ein Angriffspunkt der Krafteinrichtung an den Schwenkteilen kann in etwa den gleichen radialen Abstand von der Mittelachse aufweisen wie die Lagerung der Schwenkteile an dem Träger. Alternativ kann dieser Punkt radial nach innen oder radial nach außen versetzt sein. Darüber lässt sich im Zusammenhang mit der radial wirkenden Krafteinrichtung bzw. dem von ihr erzeugten Kraftverlauf die Verschwenkcharakteristik der Schwenkteile in gewünschter Art und Weise einzustellen bzw. positiv beeinflussen. So kann beispielsweise erreicht werden, dass gerade am Ende des Schwenkvorgangs der Schwenkteile, wenn die auf die Spannbacken aufzubringende Kraft am größten sein muss, diese große Kraft erreicht wird.

Des weiteren ist es im Rahmen der Erfindung möglich, die Schwenkteile mit einer radial nach innen verlaufenden Abwinkelung auszubilden, an der die Krafteinrichtung angreift. Auch dadurch kann ein jeweiliger Kraftverlauf beeinflusst werden.

Um bei möglichst geringer Baugröße möglichst geringe Betätigungskräf te zu erreichen, kann es vorgesehen sein, dass die Lagerung eines Schwenkteils an dem Träger oder einer daran befestigten Trägerplatte an einem axialen Endbereich des Schwenkteils vorgesehen ist. Ein Angriffspunkt der Krafteinrichtung an das Schwenkteil kann axial weit davon entfernt sein, insbesondere in etwa an dem anderen Endbereich.

Der Träger und die Lagerung der Schwenkteile sind vorteilhaft an derjenigen Seite der Wechselvorrichtung angeordnet, welche zu dem Spannkopf hin weist. Dies ermöglicht es, den Drehpunkt der Schwenkteile, welcher dann auch der Drehpunkt der Spannbacken ist, möglichst nahe zu den Spannbacken hin zu verlagern. Dadurch können die Spannbacken des Spannkopfs besonders vorteilhaft zusammengedrückt werden, nämlich insbesondere an dem entfernten Ende, welches in die Kupplung des Grundkörpers bzw. der Werkzeugmaschine eingreifen soll.

Je nach Größe der Wechselvorrichtung kann es von Vorteil sein, wenn ein verlängernder Abschnitt in seiner Längserstreckung oder gedachten Weiterführung der Längsrichtung durch die Lagerung der Schwenkteile an dem Träger verläuft. Dadurch ist es beispielsweise möglich, für Spannköpfe mit Vorbau einen möglichst großen freien Innenraum zu schaffen. Dies kann jedoch variiert werden, je nachdem, ob die Wechselvorrichtung für Spannköpfe mit möglichst großem Vorbau oder mit möglichst geringer radialer Erstreckung vorgesehen sein soll. Die Längserstreckung kann auch radial innerhalb oder außerhalb vorbeilaufen.

Der Außenbereich des Trägers kann als abstehender Arm ausgebildet sein. Insbesondere kann dazu der Träger einteilig und in etwa sternförmig ausgebildet sein. Der Außenbereich des Trägers kann als abstehender Arm ausgebildet sein, an dessen Seiten nahe dem Ende jeweils eine Trägerplatte befestigt ist. Diese Trägerplatten sind winklig ausgebildet, und können einen Teil der Wechselvorrichtung nach außen abdecken. An diesen Trägerplatten sind die Lagerachsen befestigt, vorteilhaft in etwa rechtwinklig zur radialen Erstreckung der abstehenden Arme des Trägers. Ein Schwenkteil kann zwischen zwei Trägerplatten gelagert sein. Durch die feste Verbindung der Trägerplatten mit dem Träger bzw. seinen abstehenden Armen wird eine feste Lagerung der Schwenkteile an dem Träger erreicht.

Ein Schwenkteil kann beispielsweise so ausgebildet sein, dass es ein sich in seiner Längsrichtung erstreckendes U-Profil aufweist. Dieses ist dabei zur Mittelachse der Wechselvorrichtung hin geöffnet. An der Basis, insbesondere an der Innenseite des U-Profils, ist der mindestens eine verlängernde Abschnitt befestigt. Vorteilhaft erstreckt sich der verlängernde Abschnitt dabei über die gesamte Länge des U-Profils als einstückiges Teil, beispielsweise als zylinderförmiger Stift. So kann der verlängernde Abschnitt im wesentlichen die Kraftübertragung zwischen Krafteinrichtung und Spannbacke übernehmen.

Vor allem sollte der verlängernde Abschnitt zumindest bis an den Bereich reichen, an dem die Krafteinrichtung an den Schwenkteil angreift So ist eben die Kraftübertragung besonders gut möglich. Dabei ist es möglich, dass die Krafteinrichtung direkt an dem verlängernden Abschnitt angreift.

Zur Erzeugung der Relativbewegung zwischen Träger und einem weiteren Träger, an welchem die Krafteinrichtung angreift, insbesondere dem vorgenannten Hebel-Träger, ist es möglich, die beiden Träger über einen entlang der Mittelachse verlaufenden Führungsstift oder Kraftübertragungsstift zu verbinden. Einer der beiden Träger ist mit dem Stift fest verbunden, während der andere axial beweglich daran gelagert ist. Vorteilhaft ist der Führungsstift an dem Träger befestigt und ragt über den Träger der Krafteinrichtung hinaus, insbesondere in Richtung von dem Spannkopf weg. Dies ermöglicht es, dass eine Betätigungseinrichtung sozusagen leicht an dem Träger angreifen kann, beispielsweise indem sie sowohl an dem Träger der Krafteinrichtung als auch an dem darüber hinaus stehenden Führungsstift angreift und eine Relativbewegung zwischen den beiden hervorruft, zur Betätigung der Wechselvorrichtung. Dazu kann beispielsweise der Führungsstift am Ende ein Gewinde aufweisen, auf welches ein entsprechendes Gewinde der Betätigungseinrichtung geschraubt wird. Wird sie weiter darauf geschraubt, drückt sie gegen den Träger der Krafteinrichtung und bewirkt somit eine Relativbewegung der beiden Teile. Alternativ können Hebelsysteme oder dergleichen verwendet werden, wie sie insbesondere aus der DE 101 38 343 A bekannt sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung verwirklicht sein können. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Teildarstellung einer Ausführungsform einer erfindungsgemäßen Wechselvorrichtung mit Ansicht des Innennlebens,
- Fig. 2: einen seitlichen Teilschnitt durch die Wechselvorrichtung gemäß Fig. 1,
- Fig. 3: eine Außenansicht einer kompletten erfindungsgemäßen Wechselvorrichtung an einem Spannkopf in unbetätigter Steilung,
- Fig. 4: einen seitlichen Teilschnitt durch die Anordnung aus Fig. 3,
- Fig. 5: die Anordnung nach Fig. 3 im betätigten Zustand mit zusammengedrücktem Spannkopf und
- Fig. 6: eine alternative Ausführung einer Betätigungseinrichtung für eine erfindungsgemäße Wechselvorrichtung im seitlichen Teilschnitt.

### Detailliere Beschreibung der Ausführungsbeispiele

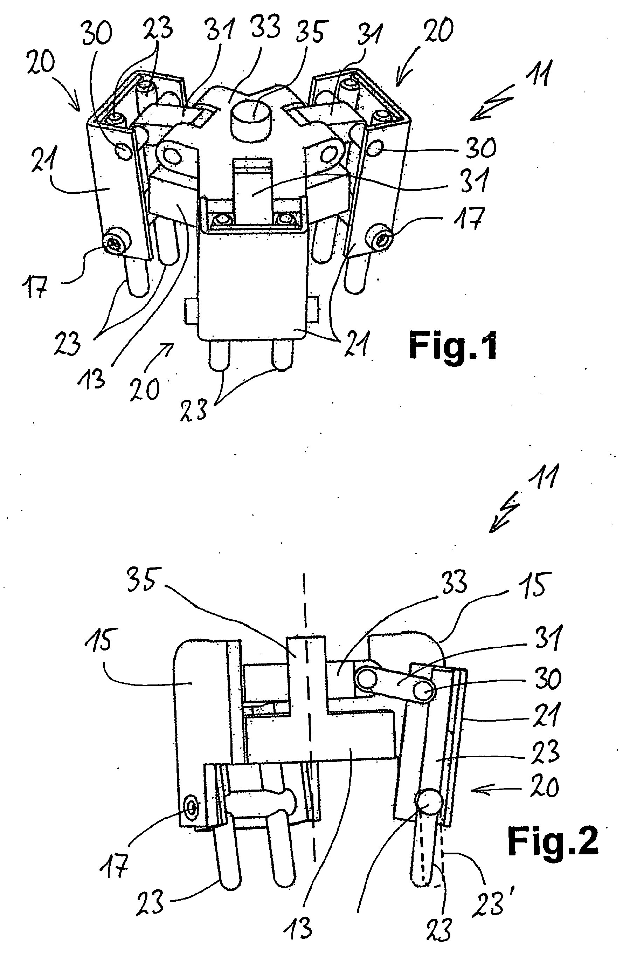

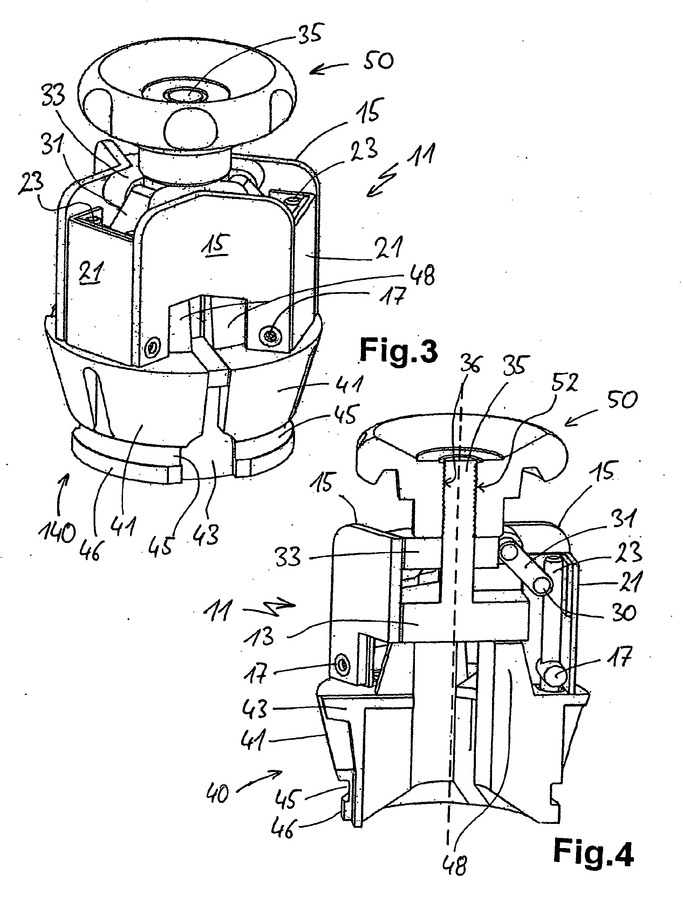

In Fig. 1 ist eine erfindungsgemäße Wechselvorrichtung 11 dargestellt. Diese ist für einen Spannkopf mit drei Spannbacken ausgebildet, wie aus der Darstellung in den Fig. 3 bis 5 deutlich wird. An einem Träger 13, der drei abstehende Arme aufweist, sind an den Seiten der Arme Trägerplatten 15 befestigt, beispielsweise angeschweißt oder ver schraubt. Die Trägerplatten 15 sind jeweils zwischen zwei benachbarten Armen des Trägers 13 vorgesehen, wie dies insbesondere Fig. 3 zeigt.

An den Trägerplatten 15 sind Schwenklager 17 vorgesehen. In einem einfachen Fall sind dies Bohrungen in der Trägerplatte 15, in welche überstehende Achsen oder dergleichen eingreifen. An den Schwenklagern 17 sind Schwenkteile 20 gelagert, die aus einem länglichen U-Profil 21 bestehen, welches zur Mitte bzw. zu der in Fig. 2 gestrichelt dargestellten Mittelachse hin offen ist. In den U-Profilen 21 der Schwenkteile 20 sind jeweils zwei Stangen 23 als verlängernde Abschnitte eingesetzt, vorteilhaft darin befestigt. Diese stehen nach unten ein deutliches Stück über die U-Profile 21 über zum Eingreifen in die Spannbacken des Spannfutters. Die Befestigung der Stangen 23 an dem Schwenklager 17 bzw. die Ausbildung dieser Anordnung ist für den Fachmann ohne weiteres möglich. Am anderen Ende der Schwenkteile 20 ist jeweils eine Hebellagerung 30 vorgesehen, insbesondere als durchgesteckte Achse oder dergleichen. Daran ist ein Hebel 31 gelenkig angeordnet. Dieser wiederum ist gelenkig an einem Hebel-Träger 33 angeordnet, der von seiner Umrissform her in etwa dem Träger 13 ähnelt. Wie dieser weist er drei Arme auf, wobei an jedem Arm ein Hebel 31-gelagert ist.

An dem Träger 13 ist ein Führungsstift 35 befestigt oder einteilig daran ausgebildet. Dieser ragt auch durch eine entsprechende Öffnung in dem Hebel-Träger 33 und steht ein Stück über ihn hervor. Dieser Vorstand kann je nach weiterer Ausbildung unterschiedlich lang sein. Darauf wird nachfolgend noch näher eingegangen.

In Fig. 2 sind die Schwenkteile 20 bereits in zumindest teilweise geschwenkter Position dargestellt. Die ursprüngliche, unbetätigte Stellung 23', in der die Stangen 23 in etwa parallel zur Mittelachse verlaufen, ist gestrichelt dargestellt.

In Fig. 3 ist im unbetätigten Zustand eine fertige Wechselvorrichtung 11 dargestellt. Sie ist an einen Spannkopf 40 angesetzt. Dieser ist im wesentlichen gemäß einem üblichen Spannkopf ausgebildet, wie er eingangs beschrieben worden ist. Er weist drei Spannbacken 41 auf, welche jeweils zwei Stirnseitenlöcher 42 aufweisen. Die Spannbacken 41 sind mit Gummiverbindungen 43 verbunden, wie dies ebenfalls aus dem Stand der Technik bekannt ist. Im unteren Bereich weisen die Spannbacken 41 eine umlaufende Nut 45 auf, unter der ein umlaufender Vorsprung 46 liegt. Damit greifen die Spannbacken 41 bzw. der Spannkopf 40 in eine entsprechende Kupplung einer Zugstange oder dergleichen in einem Grundkörper bzw. einer Werkzeugmaschine ein. Des weiteren ist zu erkennen, wie radial innerhalb der Stirnseitenlöcher 42 Vorbauten 48 an dem Spannkopf 40 ausgebildet sind.

In Fig. 3 ist im Vergleich zu Fig. 2 bereits zu entnehmen, dass der Abstand zwischen Träger 13 und Hebel-Träger 31 im unbetätigten Zustand relativ groß ist.

Aus dem Teilschnitt nach Fig. 4 im unbetätigten bzw. Ausgangszustand ist zu erkennen, dass hier die Stangen 23 parallel zur gestrichelt dargestellten Mittelachse verlaufen. Die Hebel 31 stehen ungefähr in einem Winkel von etwa 45° zur radialen Richtung und somit auch zur Mittelachse. Es ist zu erkennen, wie aufgrund des zurückgesetzten Trägers 13 und den radial relativ weit außen angeordneten Schwenkteilen 20 bzw. U-Profilen 21 und Stangen 23 ein großer Zwischenraum entsteht, in dem der Vorbau 48 des Spannkopfes 40 ausreichend Platz findet. Die gewinkelten Trägerplatten 15 können zur verdrehungssicheren Führung des Hebel-Trägers 33 bei der Relativbewegung zum Träger 13 dienen.

Bei dieser Ausbildung kann die Führungsstange 35 ein Außengewinde 36 aufweisen. Darauf ist ein Handrad 50 aufgesetzt, welches ein Innengewinde 52 passend zu dem Außengewinde 36 aufweist. Mit seiner Unterseite liegt das Handrad 50 an dem Hebel-Träger 33 an.

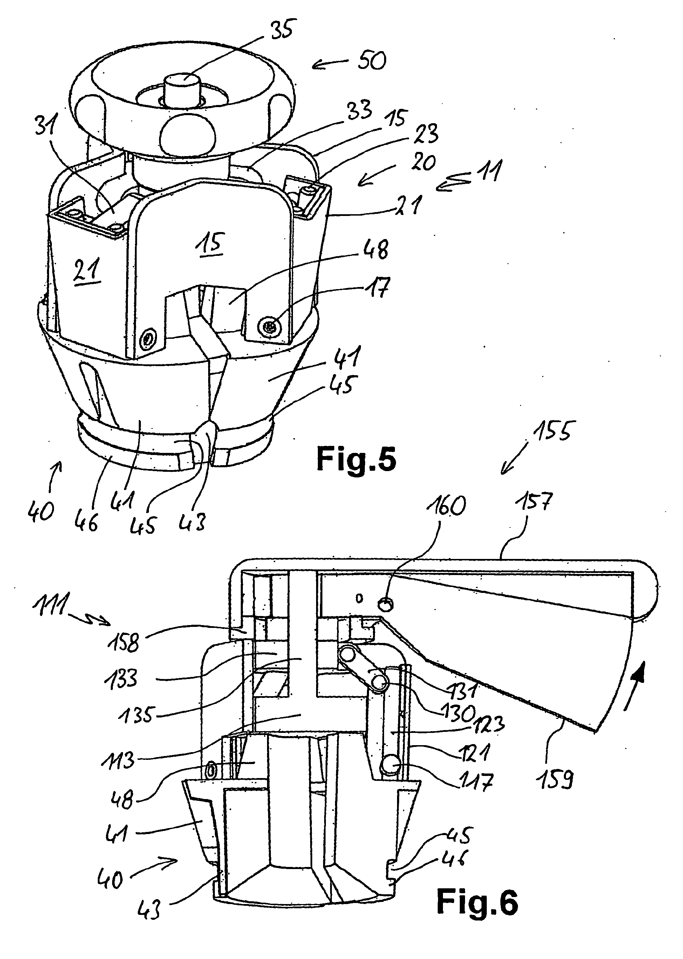

In Fig. 5 ist dargestellt, wie das Handrad 50 auf den Führungsstift 35 aufgeschraubt ist. Dadurch drückt es den Hebel-Träger 33 gegen den Träger 13. Dies bewirkt die aus dem Vergleich zwischen den Fig. 4 und 2 zu ersehende Veränderung. Der Hebel 31 wird dabei verschwenkt bzw. aufgestellt und drückt das Schwenkteil 20 radial nach außen. Dabei schwenkt dieses um das Schwenklager 17, so dass die über das U-Profil 21 bzw. das Schwenklager 17 überstehenden Stangen 23 mit ihrem Ende radial nach innen gedreht werden. In der in Fig. 5 dargestellten, maximal verschwenkten Stellung ist vorgesehen, dass der Hebel-Träger 33 noch ein Stück weiter an den Träger 13 heranbewegt worden ist. Dabei kann der Punkt, an dem die Hebel 31 an dem Hebel-Träger 33 gelagert sind, in axialer Richtung an der Hebellagerung 30 vorbeiwandern. Dabei ist er in axialer Richtung näher an dem Träger 13. Dieses entspricht dem Kniehebel-Prinzip, bei dem die Kniehebelanordnung sozusagen überdrückt wird und in eine stabile Stellung kommt. Dann ist von der Betätigungseinrichtung keine Kraft mehr aufzubringen.

Alternativ zu der aus Fig. 2 ersichtlichen Lagerung der Stangen 23, die genau auf der Höhe der Schwenklager 17 liegt, kann es vorgesehen sein, die Stangen 23 radial innerhalb oder radial außerhalb daran vorbei verlaufen zu lassen. Die damit erreichbaren Vorteile können unterschiedlicher Art sein. Beispielsweise kann damit die Schwenkbewegung der Stangen 23 aus der in Fig. 2 dargestellten, gestrichelten Position 23' heraus beeinflusst werden.

In Fig. 6 ist eine weitere Wechselvorrichtung 111 dargestellt, welche an einen bereits bekannten Spannkopf 40 angesetzt ist. Die Wechselvorrichtung 111 ist bis auf die Betätigungseinrichtung im wesentlichen identisch zu der vorher beschriebenen aufgebaut. Die Betätigungseinrichtung ist hier ein Klappgriff 155. Dieser weist eine Griffschale 157 auf, welche mit einem Aufsatz 158 versehen ist. Der Aufsatz 158 liegt an der Oberseite der Trägerplatten 115 auf. An einer Lagerung 160 ist daran ein Klappteil 159 schwenkbeweglich gelagert. -

Der von dem Träger 113 abstehende Führungsstift 135 ist mit der Griffschale 157 verbunden und verläuft dabei durch eine entsprechend gro-βe Ausnehmung in dem Klappteil 159. Das Klappteil 159 wiederum ist mit dem links von der Lagerung 160 gelegenen Abschnitt an die Oberseite des Hebel-Trägers 133 angelegt. Wird der Klappteil 159 gegen den Uhrzeigersinn gegen die Griffschale 157 gedrückt, so hält die Griffschate 157 über den Führungsstift 135 den Träger 113 fest, während der Hebei-Träger 133 nach unten und dagegen gedrückt wird. Dadurch erfolgt wiederum die bereits vorher beschriebene Drehung der Hebel 131 und somit ein Verschwenken der Schwenkteile 120 zum Zusammendrücken der Spannbacken 41 des Spannkopfs 40.

## Patentansprüche

1. Wechselvorrichtung (11; 111) für Spannköpfe (40) mit mehreren Spannbacken (41), wobei die Spannbacken durch radial verlaufende Schlitze voneinander getrennt sind und elastisch (43) miteinander verbunden sind, wobei die Wechselvorrichtung (11; 111) einen Träger (13; 113) aufweist, der sich von einer Mittelachse mit Außenbereichen in radialer Richtung erstreckt und jeweils eine Lagerung (17; 117) für ein Schwenkteil (20; 120) pro Spannbacke (41) aufweist, wobei das Schwenkteil mindestens einen verlängernden Abschnitt (23; 123) aufweist zum radialkraft- und drehmomentübertragenden Zusammenwirken mit den Spannbacken (41), wobei beim Schwenken des Schwenkteils (20; 120) durch das Zusammenwirken die verlängernden Abschnitte im wesentlichen in radialer Richtung weiter zusammenrücken durch Schwenken um die Lagerung (17; 117), wobei mit gewissem axialen Abstand zu der Lagerung und zu den verlängernden Abschnitten (23; 123) eine radial wirkende Krafteinrichtung (30, 31, 33; 130, 131, 133) an den Schwenkteilen (20; 120) angreift zum Verschwenken der Schwenkteile, **dadurch gekennzeichnet, dass** die Krafteinrichtung (30, 31, 33; 130, 131, 133) ein Kniehebelsystem aufweist zur Umwandlung einer im wesentlichen axial wirkenden Betätigungskraft (50; 155) in die radial auf die Schwenkteile (20; 120) wirkende Kraft für einen vorteilhaften Kraftverlauf sowie eine selbsttätige Arretierung.

2. Wechselvorrichtung nach Anspruch 1, **dadurch gekennzeichnet, dass** die Krafteinrichtung (30, 31, 33; 130, 131, 133) zur Erzeugung einer im wesentlichen radial nach außen wirkenden Kraft ausgebildet ist.

3. Wechselvorrichtung nach Anspruch 1, **dadurch gekennzeichnet, dass** sie einen gegenüber dem Träger (13; 113) axial bewegbaren Hebel-Träger (33; 133) aufweist, an dem pro Schwenkteil (20; 120) ein Hebel (31; 131) angeordnet ist, der mit dem Schwenkteiljeweils wirkverbunden ist und dabei in einem schrägen Winkel zur radialen Richtung steht, wobei er in etwa in derjenigen Richtung schräg auf das Schwenkteil (20; 120) zu weist, in der der Hebel-Träger (33; 133) relativ zu dem Träger (13; 113) bewegbar ist zur Verschwenkung der Schwenkteile.

4. Wechselvorrichtung nach Anspruch 3, **dadurch gekennzeichnet, dass** der Hebel (31; 131) drehbewegbar an dem Schwenkteil (20; 120) gelagert ist, wobei vorzugsweise in einer Ausgangsstellung (Fig. 4) vor dem Verschwenken der Hebel in einem Winkel von etwa 30° bis 60°, insbesondere 45°, zur Mittelachse steht und vorzugsweise dieser Winkel in einer Endstellung (Fig. 5) in etwa 90° beträgt.

5. Wechselvorrichtung nach einem der vorhergehenden Ansprüche, **dadurch gekennzeichnet, dass** ein Angriffspunkt der Krafteinrichtung (30, 31, 33; 130, 131, 133) an den Schwenkteilen (20; 120) in etwa den gleichen radialen Abstand von der Mittelachse aufweist wie die Lagerung (17; 117) der Schwenkteile.

6. Wechselvorrichtung nach einem der vorhergehenden Ansprüche, **dadurch gekennzeichnet, dass** die Lagerung (17; 117) eines Schwenkteils (20; 120) an einer Trägerplatte (15; 115) vorgesehen ist, die an dem Träger (13; 113) befestigt ist, wobei vorzugsweise pro Schwenkteil (20; 120) zwei Trägerplatten vorgesehen sind und diese außen an der Wechselvorrichtung (11; 111) angebracht sind, wobei insbesondere eine Trägerplatte (15; 115) zwischen zwei benachbarten Lagerungen (17; 117) verläuft.

7. Wechselvorrichtung nach Anspruch 6, **dadurch gekennzeichnet, dass** der Außenbereich des Trägers (13; 113) als abstehender Arm ausgebildet ist, an dessen Seiten nahe dem Ende jeweils eine Trägerplatte (15; 115) für die Schwenkteile (20; 120) befestigt ist, wobei die Trägerplatten winklig ausgebildet sind.

8. Wechselvorrichtung nach einem der vorhergehenden Ansprüche, **dadurch gekennzeichnet, dass** die Lagerung (17; 117) eines Schwenkteils (20; 120) an dem Träger (13; 113) an einem axialen Endbereich des Schwenkteils vorgesehen ist und der Angriffspunkt der Krafteinrichtung (30, 31, 33; 130, 131, 133) in etwa an dem anderen Endbereich.

9. Wechselvorrichtung nach einem der vorhergehenden Ansprüche, **dadurch gekennzeichnet, dass** der Träger (13; 113) und die Lagerung (17; 117) der Schwenkteile (20; 120) auf der zu dem Spannkopf (40) hin weisenden Seite der Wechselvorrichtung (11; 111) angeordnet sind.

10. Wechselvorrichtung nach einem der vorhergehenden Ansprüche, **dadurch gekennzeichnet, dass** der verlängernde Abschnitt (23; 123) in seiner Längserstreckung radial durch an der Lagerung (17; 117) der Schwenkteile (20; 120) an dem Träger (13; 113) verläuft.

11. Wechselvorrichtung nach einem der vorhergehenden Ansprüche, **dadurch gekennzeichnet, dass** ein Schwenkteil (20; 120) ein sich in axialer Richtung erstreckendes U-Profil (21; 121) aufweist, das zur Mittelachse der Wechselvorrichtung (11; 111) hin geöffnet ist, wobei vorzugsweise an der Basis des U-Profils (21; 121) der eine oder mehrere verlängernde Abschnitt (23; 123) befestigt ist, wobei insbesondere der verlängernde Abschnitt bis an den Bereich (30; 130) reicht, an dem die Krafteinrichtung (30, 31, 33; 130, 131, 133) an dem Schwenkteil (20; 120) angreift.

12. Wechselvorrichtung nach Anspruch 11, **dadurch gekennzeichnet, dass** die Krafteinrichtung (30, 31, 33; 130, 131, 133) auch an dem verlängernden Abschnitt (23; 123) angreift und insbesondere der eine oder mehrere verlängernde Abschnitt (23; 123) über im wesentlichen die Länge des Schwenkteils (20; 120) hinweg verläuft.

13. Wechselvorrichtung nach einem der vorhergehenden Ansprüche, **dadurch gekennzeichnet, dass** der Träger (13; 113) und ein weiterer Träger (33; 133), an welchem die Krafteinrichtung (30, 31, 33; 130, 131, 133) angreift bzw. der Teil der Krafteinrichtung ist, über einen entlang der Mittelachse verlaufenden Führungsstift (35; 135) miteinander verbunden sind, der an einem der beiden Träger (13, 33; 113, 133) befestigt ist und an dem der andere der beiden Träger zumindest axial beweglich gelagert ist.

14. Wechselvorrichtung nach Anspruch 13, **dadurch gekennzeichnet, dass** der Führungsstift (35; 135) an dem Träger (13; 113) befestigt ist und über den Träger (33; 133) der Krafteinrichtung (30, 31, 33; 130, 131, 133) hinausragt, wobei vorzugsweise eine Betätigungseinrichtung (50; 155) an dem Träger (33; 133) der Krafteinrichtung (30, 31, 33; 130, 131, 133) und an dem darüber hinausstehenden Führungsstift (35; 135) angreift zur Erzielung einer Relativbewegung zwischen den beiden zur Betätigung der Wechselvorrichtung (11; 111).

## Claims

1. A replacement device (11; 111) for clamping heads (40) having several clamping jaws (41), said clamping jaws are separated from one another by radially directed slits and are elastically (43) interconnected, said replacement device (11; 111) having a carrier (13; 113) which extends from a central axis with external regions in a radial direction and each has a bearing (17; 117) for one pivoting part (20; 120) per one of said clamping jaws (41), said pivoting part having at least one extending portion (23; 123) for radial force and torque transmitting cooperation with said clamping jaws (41), wherein on pivoting said pivoting part (20; 120) said extending portions are substantially in a radial direction further approached by pivoting about said bearing (17; 170) as a result of said cooperation, wherein a radially acting force device (30, 31, 33; 130, 131, 133) engages on the pivoting parts (20; 120) for pivoting said parts with a certain axial spacing from said bearing (17; 117) and said extending portions (23; 123), **characterized in that** the force device (30, 31, 33; 130, 131, 133) includes a toggle lever system for transforming a substantially axially acting operating force (50; 155) into a radial force acting on pivoting parts (20; 120) for an advantageous force path and self-operative locking.

2. The replacement device according to claim 1, **characterized in that** the force device (30, 31, 33; 130, 131, 133) is constructed for producing a substantially radially outwardly acting force.

3. The replacement device according to claim 1, **characterized in that** a lever carrier (33; 133) is provided and axially movable relative to said carrier (13; 113), wherein for each of said pivoting parts (20; 120) one lever (31; 131) is provided in operative connection to the respective pivoting part and is arranged at an inclined angle to said radial direction pointing in sloping manner towards said pivoting part (20; 120) roughly parallel to a moving direction of said lever carrier (33; 133) movable relative to said carrier (13; 113) for pivoting said pivoting parts.

4. The replacement device according to claim 3, **characterized in that** said lever (31; 131) is rotatably mounted on said pivoting part (20; 120), wherein preferably in an initial position (fig. 4) prior to pivoting said lever is at an angle of approximately 30° to 60°, in particular 45° to the central axis, and preferably in an end position (fig. 5) said angle is approximately 90°.

5. The replacement device according to any of the preceding claims, **characterized in that** an application point of said force device (30, 31, 33; 130, 131, 133) on said pivoting parts (20; 120) has roughly the same radial spacing from said central axis as said bearing (17; 117) of said pivoting parts.

6. The replacement device according to any of the preceding claims, **characterized in that** the bearing (17; 117) of a pivoting part (20; 120) is provided on a carrier plate (15; 115) fixed to said carrier (13; 113), preferably two of said carrier plates are provided per pivoting part (20, 120) and said carrier plates are fitted externally to said replacement device (11; 111), in particular one carrier plate (15; 115) is interposed between two adjacent bearings (17; 117).

7. The replacement device according to claim 6, **characterized in that** an external region of the carrier (13; 113) is constructed as a projecting arm, and on the sides of said arm, close to an end is fixed in each case one said carrier plate (15; 115) for said pivoting parts (20; 120), said carrier plates being angular.

8. The replacement device according to any of the preceding claims, **characterized in that** said bearing (17; 117) of a pivoting part (20; 120) on said carrier (13; 113) is provided on an axial end region of said pivoting part and the application point of said force device (30, 31, 33; 130, 131, 133) is roughly at the other end region.

9. The replacement device according to any of the preceding claims, **characterized in that** said carrier (13; 113) and said bearing (17; 117) of the pivoting parts (20; 120) are arranged on a side of the replacement device (11; 111) facing said clamping head (40).

10. The replacement device according to any of the preceding claims, **characterized in that** said extending portion (23; 123) in its longitudinal extension passes radially through said bearing (17; 117) of the pivoting parts (20; 120) on said carrier (13; 113).

11. The replacement device according to any of the preceding claims, **characterized in that** a pivoting part (20; 120) comprises an axially extending U-section (21; 121) open towards the central axis of the replacement device (11; 111), preferably on the base of said U-section (21; 121) is fixed the one or more extending portions (23; 123), in particular said extending portion reaches up to a region (30; 130) where said force device (30, 31, 33; 130, 131, 133) engages the pivoting part (20; 120).

12. The replacement device according to claim 11, **characterized in that** said force device (30, 31, 33; 130, 131, 133) engages also the extending portion (23; 123), and in particular the one or more extending portions (23; 123) pass over substantially the length of the pivoting part (20; 120).

13. The replacement device according to any of the preceding claims, **characterized in that** said carrier (13; 130) and another carrier (33; 133) where the force device (30, 31, 33; 130, 131, 133) engages or which is part of said force device, are interconnected by a guide pin (35; 135) extending along the central axis, said pin is fixed to one of said two carriers (13, 33; 113, 133) and to said pin is mounted the other one of the two carriers in an at least axially movable manner.

14. The replacement device according to claim 13, **characterized in that** said guide pin (35; 135) is fixed to said carrier (13; 113) and projects over the carrier (33; 133) of said force device (30, 31, 33; 130, 131, 133), preferably an operating device (50; 155) engaging at the carrier (33; 133) of the force device (30, 31, 33; 130, 131, 133) and the guide pin (35; 135) projecting beyond to effect a relative movement between the latter two components for operating said replacement device (11; 111).

## Revendications

1. Dispositif de remplacement (11 ; 111) pour têtes de serrage (40) comprenant plusieurs mâchoires de serrage (41), les mâchoires de serrage étant séparées les unes des autres par des fentes s'étendant radialement, et étant connectées les unes aux autres élastiquement (43), le dispositif de remplacement (11 ; 111) présentant un support (13 ; 113) qui s'étend depuis un axe médian par des régions extérieures dans la direction radiale et présente à chaque fois un support sur palier (17 ; 117) pour une partie pivotante (20 ; 120) pour chaque mâchoire de serrage (41), la partie pivotante présentant au moins une portion de prolongement (23 ; 123) pour coopérer avec les mâchoires de serrage (41) en transmettant les forces radiales et les couples, les portions de prolongement se rapprochant davantage l'une de l'autre par pivotement autour du support sur palier (17 ; 117) lors du pivotement de la partie pivotante (20 ; 120) par coopération essentiellement dans la direction radiale, un dispositif de force (30, 31, 33 ; 130, 131, 133) agissant radialement venant en prise avec les parties pivotantes (20 ; 120) à une certaine distance axiale du support sur palier et des portions de prolongement (23, 123), en vue de faire pivoter les parties pivotantes, **caractérisé en ce que** le dispositif de force (30, 31, 33 ; 130, 131, 133) présente un système à genouillère pour convertir une force d'actionnement (50 ; 155) agissant sensiblement axialement en la force agissant radialement sur les parties pivotantes (20 ; 120) pour produire une courbe de force avantageuse ainsi qu'un blocage automatique.

2. Dispositif de remplacement selon la revendication 1, **caractérisé en ce que** le dispositif de force (30, 31, 33 ; 130, 131, 133) est réalisé pour produire une force agissant sensiblement radialement vers l'extérieur.

3. Dispositif de remplacement selon la revendication 1, **caractérisé en ce qu'**il présente un support de levier (33 ; 133) déplaçable axialement par rapport au support (13 ; 113), au niveau duquel est disposé un levier (31 ; 131) respectif pour chaque partie pivotante (20 ; 120), lequel est en liaison fonctionnelle avec la partie pivotante respective et est ainsi orienté suivant un angle oblique par rapport à la direction radiale, en étant tourné obliquement vers la partie pivotante (20 ; 120) approximativement dans la direction dans laquelle le support de levier (33 ; 133) peut être déplacé par rapport au support (13; 113) pour faire pivoter les parties pivotantes.

4. Dispositif de remplacement selon la revendication 3, **caractérisé en ce que** le levier (31 ; 131) est monté de manière rotative sur la partie pivotante (20 ; 120), le levier étant de préférence orienté par rapport à l'axe médian, dans une position de départ (figure 4) avant le pivotement, suivant un angle d'environ 30° à 60°, notamment de 45°, et cet angle valant de préférence, dans une position finale (figure 5), approximativement 90°.

5. Dispositif de remplacement selon l'une quelconque des revendications précédentes, **caractérisé en ce qu'**un point d'engagement du dispositif de force (30, 31, 33 ; 130, 131, 133) avec les parties pivotantes (20 ; 120) présente approximativement la même distance radiale à l'axe médian que le support sur palier (17 ; 117) des parties pivotantes.

6. Dispositif de remplacement selon l'une quelconque des revendications précédentes, **caractérisé en ce que** le support sur palier (17 ; 117) d'une partie pivotante (20 ; 120) est prévu sur une plaque de support (15 ; 115) qui est fixée sur le support (13 ; 113), deux plaques de support étant de préférence prévues pour chaque partie pivotante (20 ; 120) et celles-ci étant montées à l'extérieur sur le dispositif de remplacement (11 ; 111), une plaque de support (15 ; 115) s'étendant notamment entre deux supports sur palier adjacents (17 ; 117).

7. Dispositif de remplacement selon la revendication 6, **caractérisé en ce que** la région extérieure du support (13 ; 113) est réalisée sous forme de bras saillant, sur les côtés duquel, au niveau de l'extrémité, est fixée à chaque fois une plaque de support (15 ; 115) pour les parties pivotantes (20 ; 120), les plaques de support étant réalisées sous forme coudée.

8. Dispositif de remplacement selon l'une quelconque des revendications précédentes, **caractérisé en ce que** le support sur palier (17 ; 117) d'une partie pivotante (20 ; 120) est prévu sur le support (13 ; 113) au niveau d'une région d'extrémité axiale de la partie pivotante et le point d'engagement du dispositif de force (30, 31, 33 ; 130, 131, 133) est prévu approximativement au niveau de l'autre région d'extrémité.

9. Dispositif de remplacement selon l'une quelconque des revendications précédentes, **caractérisé en ce que** le support (13 ; 113) et le support sur palier (17 ; 117) des parties pivotantes (20 ; 120) sont disposés du côté du dispositif de remplacement (11 ; 111) tourné vers la tête de serrage (40).

10. Dispositif de remplacement selon l'une quelconque des revendications précédentes, **caractérisé en ce que** la portion de prolongement (23 ; 123) s'étend dans son étendue longitudinale radialement à travers le support sur palier (17 ; 117) des parties pivotantes (20 ; 120) sur le support (13 ; 113).

11. Dispositif de remplacement selon l'une quelconque des revendications précédentes, **caractérisé en ce qu'**une partie pivotante (20 ; 120) présente un profilé en U (21 ; 121) s'étendant dans la direction axiale, lequel est ouvert vers l'axe médian du dispositif de remplacement (11 ; 111), l'une ou plusieurs des portions de prolongement (23 ; 123) étant fixée(s) de préférence à la base du profilé en U (21 ; 121), notamment la portion de prolongement s'étendant jusqu'à la région (30 ; 130) au niveau de laquelle le dispositif de force (30, 31, 33 ; 130, 131, 133) s'engage avec la partie pivotante (20 ; 120).

12. Dispositif de remplacement selon la revendication 11, **caractérisé en ce que** le dispositif de force (30, 31, 33 ; 130, 131, 133) vient en prise également avec la portion de prolongement (23 ; 123) et notamment l'une ou plusieurs des portions de prolongement (23 ; 123) s'étend(ent) essentiellement au-delà de la longueur de la partie pivotante (20 ; 120).

13. Dispositif de remplacement selon l'une quelconque des revendications précédentes, **caractérisé en ce que** le support (13 ; 113) et un support supplémentaire (33 ; 133), avec lequel s'engage le dispositif de force (30, 31, 33 ; 130, 131, 133) ou qui fait partie du dispositif de force, sont connectés l'un à l'autre par le biais d'une goupille de guidage (35 ; 135) s'étendant le long de l'axe médian, laquelle est fixée à l'un des deux supports (13, 33 ; 113, 133) et sur laquelle est monté de manière déplaçable au moins axialement, l'autre des deux supports.

14. Dispositif de remplacement selon la revendication 13, **caractérisé en ce que** la goupille de guidage (35 ; 135) est fixée sur le support (13 ; 113) et fait saillie au-delà du support (33 ; 133) du dispositif de force (30, 31, 33 ; 130, 131, 133), un dispositif d'actionnement (50 ; 155) venant en prise de préférence avec le support (33 ; 133) du dispositif de force (30, 31, 33 ; 130, 131, 133) et avec la goupille de guidage (35 ; 135) saillant au-delà de celui-ci, afin d'obtenir un mouvement relatif entre les deux, pour actionner le dispositif de remplacement (11 ; 111).
